Europäisches Patentamt

European Patent Office

Office européen des brevets

(19)

(11) **EP 0 959 369 B1**

(12) **EUROPÄISCHE PATENTSCHRIFT**

(45) Veröffentlichungstag und Bekanntmachung des Hinweises auf die Patenterteilung:
**16.01.2002 Patentblatt 2002/03**

(51) Int Cl.⁷: **G01S 13/90**

(21) Anmeldenummer: **99110092.6**

(22) Anmeldetag: **22.05.1999**

(54) **Verfahren zur Kompression und Dekompression von Komplexen Bilddaten eines SAR-Radars**

Compression and decompression method for complex image data from a SAR radar

Procédé de compression et de décompression pour des données d'image complexes d'un radar à ouverture

(84) Benannte Vertragsstaaten:
**DE FR GB NL**

(30) Priorität: **22.05.1998 DE 19822848**

(43) Veröffentlichungstag der Anmeldung:
**24.11.1999 Patentblatt 1999/47**

(73) Patentinhaber: **Deutsches Zentrum für Luft- und Raumfahrt e.V.**
**53175 Bonn (DE)**

(72) Erfinder:
• **Benz, Ursula,Dr.**
**82239 Alling (DE)**
• **Fischer, Jens**
**82205 Gilching (DE)**
• **Moreira, Alberto, Dr.**
**85748 Garching (DE)**

(74) Vertreter: **von Kirschbaum, Albrecht, Dipl.-Ing.**
**Patentanwalt Postfach 1520**
**82102 Germering (DE)**

(56) Entgegenhaltungen:
**DE-C- 4 427 656          GB-A- 2 278 520**
**US-A- 4 801 939**

**Beschreibung**

Die Erfindung betrifft Verfahren zur Kompression und Dekompression von komplexen Bilddaten eines SAR-Radars.

Radar mit synthetischer Apertur SAR (**S**ynthetic **A**perture **R**adar) ist ein Instrument zur Fernerkundung, welches in immer größerem Maße bei der Abbildung, Überwachung und Untersuchung der Erdoberfläche eingesetzt wird. Ein solches System hat einen sich mit konstanter Geschwindigkeit bewegenden Träger, eine orthogonal zur Bewegungsrichtung blickende Antenne und ein kohärentes Radarsystem, welches periodisch elektromagnetische Impulse sendet. Die Bewegungsrichtung des Trägers wird als Azimutrichtung bezeichnet, die dazu orthogonale, schräg nach unten weisende, als Entfernungsrichtung.

Im normalen SAR-Betriebsmodus, als Streifenmodus bezeichnet, wird während des Überflugs über ein zu beobachtendes Gebiet ein Streifen mit der Länge der überflogenen Strecke abgebildet. Die Streifenbreite hängt unter anderem von der Größe des Zeitfensters ab, in dem die auf einen gesendeten Impulses reflektierten Radarechos empfangen werden. Die empfangenen Echos werden in der Frequenz umgesetzt (gemischt), quadraturdemoduliert, digitalisiert und in einem zweidimensionalen Echospeicher abgelegt.

Im Falle eines polarimetrischen SAR-Systems werden zusätzlich zur Intensität und Phase die Polarisation des Sendeimpulses und des empfangenen Echos erfaßt. Im vollpolarimetrischen Betrieb erhält man von einem Gebiet vier Aufnahmen in vier voneinander getrennten SAR-Kanälen.

Es werden in den zwei copolaren Kanälen die horizontal polarisierten Echos eines horizontal polarisierten Sendeimpulses (HH), und die vertikal polarisierten Echos eines vertikal polarisierten Sendeimpulses (VV) erfaßt, in den zwei crosspolaren Kanälen werden die horizontal polarisierten Echos eines vertikal polarisierten Sendeimpulses (VH) und die vertikal polarisierten Echos eines horizontal polarisierten Sendeimpulses (HV) erfaßt.

Die SAR-Verarbeitung erfolgt getrennt für die vier Kanäle und unterscheidet sich so kaum von der Verarbeitung im nicht polarimetrischen Betrieb. Sie besteht für jeden Kanal hauptsächlich aus Entferungskompression, Korrektur der Zielentfernungsänderung und Azimutkompression:

Bei der Entfernungskompression ist die geometrische Auflösung in Entfernungsrichtung von der Bandbreite der gesendeten Radarimpulse abhängig. Um diese Auflösung zu verbessern, werden die gesendeten Impulse moduliert. Dafür wird meist eine lineare Frequenzmodulation verwendet, welche im folgenden immer angenommen wird. Die Entfernungskompression bedeutet eine Filterung der empfangenen Signale in Entfernungsrichtung nach der Optimalfiltertheorie, wodurch die zeitlich ausgedehnten Signale zu Impulsen komprimiert werden.

Die Zielentfernungsänderung ist eine Folge der Variation der Entfernung zwischen Antenne und Punktziel während der Bildung der synthetischen Apertur. Sie beschreibt die Entfernungsvariation der zu einem Punktziel gehörenden Echos im zweidimensionalen Echospeicher. Daher ist eine Korrektur der Zielentfernungsänderung erforderlich.

Die Impulskompression nach der Optimalfiltertheorie in Azimut entspricht der Bildung der synthetischen Apertur. Die Azimutmodulation ist ebenfalls eine Folge der Entfernungsänderung zwischen Antenne und Ziel beim Vorbeiflug des Trägers. Die Optimalfilterung bedeutet ein kohärentes Aufsummieren aller zu einer Azimutposition gehörenden Echos. Wird die Zielentfernungsänderung vor der Azimutkompression korrigiert, so kann die Azimutkompression durch eine eindimensionale Filterfunktion realisiert werden.

Die SAR Verarbeitung liefert Daten im komplexen Format. Zu jedem Abtastwert p erhält man sowohl einen Realteil $x = \alpha \cdot \cos\varphi$ als auch einen Imaginärteil $y = \alpha \cdot \sin\varphi$

$$p = x + iy. \qquad (1)$$

Um die hohe Dynamik der Daten zu erfassen, werden sowohl Real- als auch Imaginärteil mit 32 Bits pro Abtastwert abgespeichert.

Alternativ werden komplexe Daten auch durch Polarkoordinaten $ae^{i\varphi}$ beschrieben. Auch hier werden im allgemeinen jeweils 32 Bits pro Amplitude und Phase verwendet.

Für die bildhafte Darstellung wird der Betrag der komplexen Daten quadriert und abgebildet. In diesem Falle wird die Phaseninformation nicht benötigt.

Bei polarimetrischen und interferometrischen SAR-System sind die Phasenunterschiede zwischen den verschiedenen Kanälen von grundlegender Bedeutung. Deshalb ist hier eine hochgenaue Erfassung der Phaseninformation erforderlich. Dies führt zu einer sehr hohen Datenrate. Vollpolarimetrisch arbeitende SAR-System erfordern die Speicherung und/oder Übertragung von mehreren hundert Megabit pro Sekunde. Eine geeignete Form der Datenkompression der komplexen Daten ist notwendig.

Datenkompression führt zu einer geringeren Datenrate, wobei idealer Weise nur redundante Information verloren geht. In diesem Fall wird von einer verlustlosen Datenkompression gesprochen. Je höher die Redundanz in einem Datensatz ist, desto größer ist der erzielbare Kompressionfaktor durch eine verlustlose Datenkompression.

Verlustbehaftete Kompressionsverfahren reduzieren die Redundanz der Daten, führen aber zu einer fehlerhaften Übertragung der gewünschten Information. Durch geeignete Algorithmen versucht man diese Fehler so gering wie möglich zu halten.

Die Datenkompression muß vom Empfänger durch eine entsprechende Dekompression rückgängig gemacht werden, um auf diese Weise aus den komprimierten Daten die rekonstruierten SAR-Daten zu erhalten. Bei verlustloser Komprimierung und Dekomprimierung stimmen diese mit den Originaldaten überein; bei verlustbehafteter Komprimierung und Dekomprimierung ergeben sich jedoch Fehler gegenüber den Originaldaten.

Die Leistung des Fehlersignals in Relation zur Signalleistung ergibt dann ein Signal/Quantisierungs-Rauschleistungsverhältnis (SDNR, Signal-to-digitization-noise-ratio). Dies stellt ein wesentliches Maß zum Vergleich der verschiedenen Kompressionsalgorithmen dar. Die Standardabweichung der Phase des Fehlersignals wird zusätzlich zur Leistung des Fehlersignals ermittelt, wenn Phaseninformation der SAR-Daten für eine Weiterverarbeitung erforderlich ist.

SAR-Daten besitzen eine sehr geringere Redundanz. Daher kann keine verlustlose Kompression angewendet werden. Verlustbehaftete Kompressionsverfahren, die sich für Bilddaten eignen, sind nicht unmittelbar auf SAR-Daten anwendbar, da SAR-Daten unter anderem durch das Speckle eine wesentlich andere Charakteristik als visuelle Bilddaten haben. Zudem beziehen sich die Kompressionsverfahren im visuellen und akustischen Bereich ausschließlich auf die Kompression reeller Daten. SAR-Daten aber sind komplex (Siehe Gl. 1). Eine getrennte Anwendung der Algorithmen auf Realteil und Imaginärteil der SAR-Daten kann zu Phasenfehlern führen, wenn die verlustbehaftete Kompression nicht als lineares Verfahren betrachtet werden kann.

Es existieren verschiedene Verfahren zur Kompression von SAR-Intensitätsdaten, wie Blockcodierung, Vektorquantisierung, Predictive Coding, adaptive Kompression nach einer diskreten Cosinustransformation oder auch Hadamardtransformation nach einer Fouriertransformation, und nach einer Wavelettransformation (Mohorko, J., Filip, P., "Image Coding Using Pyramid Vector Quantization of Wavelet Coefficients", DLR-report, University FERI, Maribor, 1995, 64 S.).

Mit der Wavelettransformation werden die besten Resultate erzielt, und sie kann daher für hohe Kompressionsfaktoren eingesetzt werden. Auch zur Kompression von komplexen, polarimetrischen Daten existiert ein Algorithmus, bei dem nicht die Daten selbst, sondern die Streumatrix komprimiert wird. (Zyl, J., Burnette, C., Data Volume Reduction for Single-Look Polarimetric Imaging Radar Data", IEEE Transactions on Geoscience and Remote Sensing, vol. 29, Nr.5, Sept. 91, S. 784 bis 786.)

Die Verfahren zur Kompression von reellen Daten sind nur bedingt oder nicht geeignet zur Kompression komplexer SAR-Daten, da der entstehende Phasenfehler zu groß für polarimetrische oder interferometrische Anwendungen ist.

Das Verfahren von Zyl und Burnette zur Kompression komplexer, polarimetrischer SAR-Bilddaten erlaubt eine Kompression nur mit den festen Faktoren von 1:3,2 bzw. 1:6,4.Im Falle der kleinen Kompressionsrate liefert das Verfahren geringe Phasenfehler (die Standardabweichung des Phasenfehlers beträgt 0,27°) und ein hohes Signal-zu-Rauschleistungsverhältnis (SDNR) für die copolaren Kanäle (SDNR = 45 dB). Die Qualität der dekomprimierten SAR-Bilddaten in den beiden cross-polaren Kanälen ist jedoch wesentlich schlechter. Hier betragen die Standardabweichung des Phasenfehlers 0,6° und das SDNR nur 35dB. Für die höhere Kompressionsrate (1:6,4) werden keine erzielbaren Phasenfehler genannt; das Signal-zu-Rauschleistungsverhältnis der copolaren Kanäle beträgt hier 20 dB und für die crosspolaren Kanäle entsprechend 10 dB.

Aufgabe der Erfindung ist es, ein Verfahren zur Kompression von komplexen Bilddaten in einem SAR-Radar dahingehend zu verbessern, daß die komplexen SAR-Daten unter weitgehendem Erhalt der Phaseninformation komprimiert werden. Gemäß der Erfindung ist diese Aufgabe mit den Merkmalen im kennzeichnenden Teil des Anspruchs 1 gelöst. Vorteilhafte Weiterbildungen sind Gegenstand der auf den Anspruch 1 unmittelbar oder mittelbar rückbezogenen Ansprüche.

Durch die Erfindung ist somit ein schnell und relativ einfach durchzuführendes Verfahren in Form eines flexiblen Kompressionssystems (**FLE**xible **C**ompression **S**ystem FLECS) realsisiert, wobei je nach Anwendung entweder ein gewünschter Kompressionsgrad oder eine angestrebte Qualität der rekonstruierten Daten angegeben werden. Hierbei können für eine Restkonstruktion von Phasen und Amplituden unterschiedliche Vorgaben gemacht werden, wobei in Abhängigkeit von den vorgegebenen Kriterien die Kompression unterschiedlich durchgeführt wird.

Hierzu ergeben sich im wesentlichen zwei Varianten:

1. Eine Kompression wird auf den komplexen Daten im Polarformat durchgeführt. Hierbei wird eine hohe Flexibilität durch die Separierung der Phaseninformation erreicht. Wird die Phase nicht benötigt, erlaubt das erfindungsgemäße Verfahren sehr große Kompressionsraten; hierbei sinkt je nach geforderter Phasengenauigkeit die Kompressionsrate für die Phaseninformation. Entsprechend sinkt dann entweder die gesamte Kompressionsrate oder die Qualität der rekonstruierten Amplitudenwerte.

2. Die Kompression erfolgt getrennt in Real- und Imaginärteil der Daten, was jedoch nur für mittlere bis kleine Kompressionsraten möglich ist. Es treten dann bei der Rekonstruktion der Daten nur sehr geringe Phasenfehler auf, ebenso werden die Amplitudenwerte ausgezeichnet wiederhergestellt.

Je nachdem, welche Variante gewählt wird, muß ein unterschiedlicher Algorithmus zur Kompression der komplexen SAR-Bilddaten angewendet werden, um eine Anpassung an die veränderte Charakteristik der Daten zu gewährleisten.

Bei einer Kompression im Polarformat werden komplexe SAR-Bilddaten zunächst aus den vorliegenden kartesischen Koordinaten (Real- und Imaginärteil) in polare Koordinaten (Amplitude und Phase) umgerechnet. Amplitude und Phase werden entsprechend der unterschiedlichen Charakteristik der Daten mit verschiedenen Algorithmen komprimiert.

Die Amplituden werden zunächst mit Wavelets transformiert. Die daraus resultierenden Koeffizienten sind in verschiedenen Frequenzbändern angeordnet, wobei die Koeffizienten in jedem Frequenzband mit jeweils so vielen Bits quantisiert werden, wie in einer zugehörigen Bit-Maske festgelegt ist. Die Bit-maske wird vor der Quantisierung durch eine Energiemessung auf den Frequenzbändern ermittelt.

Zur Quantisierung werden die Koeffizienten in kleine Blöcke von beispielsweise 8x8-Blöcke unterteilt. Die einzelnen Blökke werden mit einem adaptiven Linearquantisierer komprimiert, wobei die Schrittgröße des Quantisierers an die Dynamik des jeweiligen Blocks angepaßt wird. Je nach erforderlichem Kompressionsgrad wird die Schrittzahl des Linearquantisierers und damit die Bitzahl pro Abtastwert variiert.

Die Phasen werden je nach Anwendungsfall entweder nicht übertragen oder mit einem Vektorquantisierer komprimiert oder auch ohne jede Kompression übertragen. Für eine Kompression der Phase ist ein Vektorquantisierer sehr gut geeignet. Muß bei einer Amplitudenkompression ein dynamische Anpassung des Codebuches erfolgen, so ist das für eine Datenkompression nicht notwendig, weil sich hier die Datencharakteristik kaum ändert.

Durch die Entkopplung von Phasen- und Amplitudenkompression ist der entstehende Phasenfehler weitgehend von der Rekonstrukion der Amplitude unabhängig und umgekehrt. So wird eine hohe Adaptivität für verschiedene Anwendungsbereiche erzielt,

Die beschriebene Kompression im Polarformat hat folgende Vorteile:

- Amplituden- und Phasenkompression sind entkoppelt.
- Kompressionsalgorithmen können auf die spezielle Charakteristik der Ampltituden- und Phasendaten abgestimmt werden. Die Phase kann bei Bedarf unkomprimiert übertragen zu werden. Wird die Phaseninformation nicht benötigt, kann eine Übertragung vollständig eingespart werden.
- Die Amplitudendaten könnten mit nur geringen Verlusten stark komprimiert werden. Die Kompressionsrate $cr_A$ bezüglich der Amplitudendaten von 1:32 führt zu einem Signal-zu-Digitalisierungsrauschleistungsverhältnis (SDNR) von mehr als 13dB. Eine Kompressionsrate $cr_A$ von 1:16 führt zu einem Signal-zu-Digitalisierungsrauschleistungsverhältnis von mehr als 22dB.

- Die Vektorquanitisierung der Phase erlaubt einen Kompressionsfaktor $cr_p$ der Phasendaten von 1: 6,15, wobei die Standardabweichung des Phasenfehlers kleiner als 8° ist.
- Für eine nahezu verlustfreie Kompression ist ein Faktor von etwa 1:10 möglich. (Das SDNR ist dann größer als 17dB, die Standardabweichung des Phasenfehlers ist ohne eine Mittelungsoperation kleiner als 8°; durch eine Mittelung über drei (3) Pixel hinweg - üblicherweise für polarimetrische und interferometrische SAR-Anwendungen - ergibt sich sogar eine Standardabweichung des Phasenfehlers, die kleiner als 3° ist.)

Bei einer Kompression im kartesischen Format wird der komplexe Datensatz in seinem bereits vorliegenden Format in Form eines Real- und eines Imaginärteils weiterverarbeitet. Der Kompressionsgrad wird dabei als so klein angenommen, daß die Kompression noch als linear betrachtet werden kann. Daher kann sie separat auf den Real- und Imaginärteil angewendet werden.

Real- und Imaginärteil werden jeweils auf die gleiche Art und Weise komprimiert wie die Amplitudendaten in der vorstehend beschriebenen Variante. Nur die für die Quantisierung der Koeffizienten nötige Bitmaske muß gesondert ermittelt werden, wobei dieselbe Bitmaske für Real- und Imaginärteil verwendet werden kann.

Die Kompression im kartesischen Format bietet folgende Vorteile:

Es ist keine Koordinatentransformation notwendig.
Es ist kein Lernvorgang notwendig.
Das Verfahren arbeitet sehr schnell.
Bei Kompressionsraten von 1:3 sind die dekomprimierten Daten noch nahezu mit den Originaldaten identisch. (Es wird ein SDNR von mehr als 66dB erzielt; die Standardabweichung des Phasenfehlers ist ohne Mittelungsoperation kleiner als 0,15°.)

Das flexible Kompressionssystem FLECS verbindet die Vorteile der beiden beschriebenen Verfahren, Kompression der Daten im kartesischen Format oder Polarformat, miteinander. Entsprechend der geforderten Qualität der SAR-Bilddaten, die diese nach der Rekonstruktion ausweisen sollen, wählt das flexible Kompressionssystem FLECS zwischen den Varianten.

Das erfindungsgemäße Verfahren bietet somit die folgenden Vorteile:

Nahezu beliebige Kompressionsraten bis zu 1:32 sind wählbar.
Für Kompressionsraten bis zu 3 ergeben sich kaum meßbare Verluste durch die Datenkompression.
Bei vollpolarimetrischen Datensätzen wird nahezu die gleiche Rekonstruktionsqualität in allen vier Kanälen erzielt.

Es können unterschiedliche Anforderungen an die Qualität der Amplitude und der Phase des dekomprimierten SAR-Bildes gestellt werden. Bei gleichbleibender Qualität der rekonstruierten Amplitude, kann so

a) eine verlustfreie Rekonstruktion der Phaseninformation,
b) eine sehr gute Rekonstruktion oder
c) auch keine Phasenrekonstruktion gewählt werden.

Nachfolgend wird ein Ausführungsbeispiel zum Durchführen des erfindungsgemäßen Verfahrens beschrieben. Der Algorithmus FLECS ist die Bezeichnung für das gesamte Verfahren, also sowohl für die Komponenten auf Real- und Imaginärteil, Amplitude und Phase als auch auf den nachstehend beschriebenen Entscheidungsprozeß.

Der Algorithmus FLECS wählt basierend auf den Angaben des Anwenders das geeignete Verfahren zur Kompression aus. Dabei sind als Eingabe die Information darüber notwendig, ob die Phaseninformation nicht notwendig ist oder fehlerfrei erhalten werden soll. Darüber hinaus muß entweder der gewünschte Kompressionsgrad angegeben werden oder die gewünschte Qualität der rekonstruierten Daten. Dabei können getrennte Forderungen bezüglich der Phasenrekonstruktion und der Amplitudenrekonstruktion gestellt werden.

Prinzipiell erfolgt die Auswahl nach folgendem Prinzip:

- Muß die Phaseninformation voll erhalten werden, dann werden die Daten unabhängig vom gewünschten Kompressionsgrad im Polarformat komprimiert.
- Wird die Phaseninformation nicht benötigt, werden die Daten ebenfalls unabhängig vom gewünschten Kompressionsgrad im Polarformat komprimiert.
- Soll die Phaseninformation zusammen mit den Amplitudendaten gut erhalten werden, erfolgt eine Auswahl in Abhängigkeit des Kompressionsgrades.

Für kleine Kompressionsgrade, respektive für hohe Anforderungen an die Phasengenauigkeit und/oder die Amplitudenkonstruktion werden die Daten im kartesischen Format komprimiert. Ist der gewünschte Kompressionsgrad hoch oder werden geringere Anforderungen an die Phasengenauigkeit gestellt, wird auf die Kompression der Daten im Polarformat umgestellt. Dies erlaubt eine hohe Güte der Amplitudenrekonstruktion.

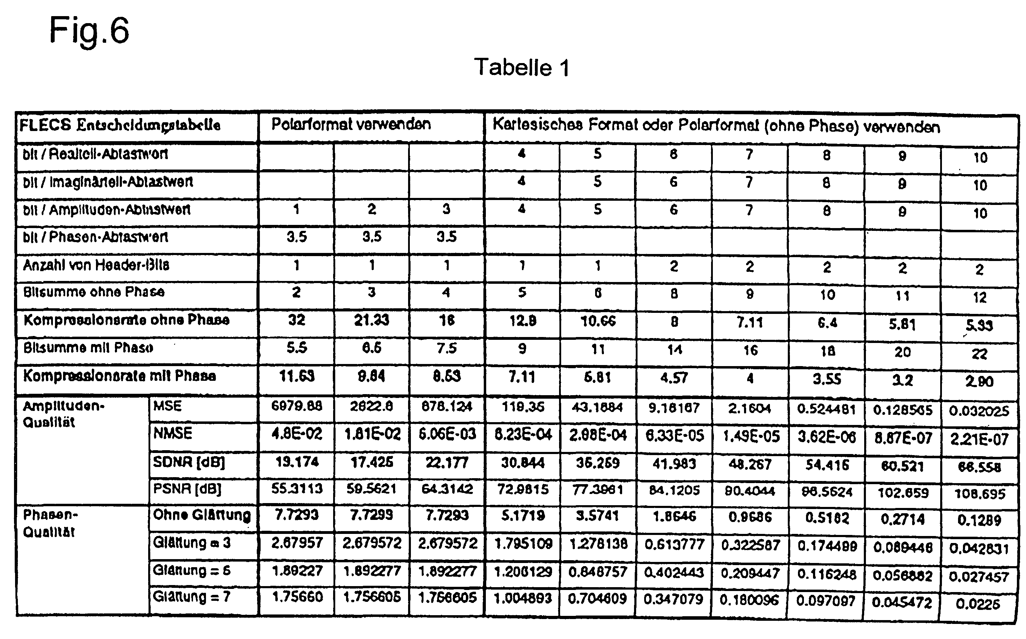

Eine optimale Festlegung des Schwellwerts des Kompressionsgrades, ab welchem die Daten im Polarformat komprimiert werden sollen, hängt von den zu komprimierenden Daten ab. Im vorliegenden Anwendungsbeispiel wurde ein vollpolarimetrischer E-SAR-Datensatz verwendet. Hier sind Kompressionsgrade kleiner 1:8 als gering zu betrachten; dementsprechend wird bis zu diesem Kompressionsgrad die Kompression auf kartesischen Koordinaten ausgewählt. (Siehe Tabelle 1 in Fig.6)

Mit vertretbarem Aufwand kann mit einem Vektorquantisierer eine Standardabweichung des Phasenfehlers von 7° nicht unterschritten werden. Daher muß für Anforderungen, die eine höhere Phasengenauigkeit erfordern, auf die Kompression der Daten im kartesischen Format mit einer entsprechend niedrigen Kompressionsrate ausgewichen werden.

Es ist zu erwarten, daß unterschiedliche Sensoren, bzw. unterschiedliche SAR-Modi andere Schwellwerte des Kompressionsgrades zwischen der Kompression der Daten im kartesischen Format oder im Polarformat erfordern.

Zu diesem Zwecke muß für jeden Sensor eine Tabelle entsprechend Tabelle 1 in Fig.6 mit den Rekonstruktionsqualitäten für Amplitude und Phase der zu komprimierenden SAR-Bilddaten in Abhängigkeit von den Kompressionsgraden aufgestellt werden.

Eine solche Tabelle erhält man, indem ein typischer SAR-Bilddatensatz mit allen einstellbaren Kompressionsgraden komprimiert, dekomprimiert und die jeweils erzielte Rekonstruktionsqualität für Amplitude und Phase in einer Tabelle festgehalten wird. Je nach erzielter Qualität wird in der Tabelle 1 festgelegt, wann der Algorithmus FLECS eine Formatkonvertierung vornehmen soll.

Hierbei wird unter typischer SAR-Bilddatensatz verstanden, daß für spätere, möglichst genaue Qualitätsprognosen der verwendete Datensatz die gleiche Dynamik (Differenz zwischen Minimum und Maximum) enthalten sollte wie solche Datensätze, die in Zukunft komprimiert werden sollen. Es empfiehlt sich daher, einen SAR-Bilddatensatz mit darin abgebildeten Corner-Reflektoren zu verwenden. Diese erzeugen eine hohe Datendynamik und daher eher schlechtere Rekonstruktionsqualitäten. Die Prognose künftiger Kompressionsgüten ist daher eher unterschätzt. Andernfalls würde es beispielsweise zu unerwartet hohen Phasenfehlern in Interferogrammen führen. Der bei einer Kompression entstehende Phasenfehler sollte generell nicht höher sein als derjenige der anderen Quellen.

Tabelle 1 widerspiegelt ein spezielles Ausführungsbeispiel einer Entscheidungstabelle, welche alle für den späteren Entscheidungsprozeß des flexiblen Kompressionssystems FLECS notwendigen Informationen enthält.

In der Entscheidungstabelle 1 stellen fettgedruckte Zeilen mögliche Anforderungen dar. In der jeweiligen Spalte darüber kann abgelesen werden, ob FLECS eine Formatkonvertierung vornimmt und wieviel Bit für jeweils Amplitude und Phase oder Real- und Imaginärteil aufgebracht werden müssen. Bei Verwendung von weniger als 6 Bit pro Amplitude, Realteil oder Imaginärteil eines Abtastwerts führt eine Kompression der Header-Information im Verhältnis 1:2 zu keinen zusätzlichen registrierbaren Fehlern. Unter Beibehaltung der Qualität erhöht sich die Kompressionsrate dadurch noch einmal beträchtlich; dies ist in Kompressionsraten von etwa cr>8 bzw. cr>4,57 (in Tabelle 1, Fig.6) bereits berücksichtigt.

Im Anwendungsfall können zu Kompressionsgrad oder Rekonstruktionsqualität bezüglich Amplitude und Phase separate Forderungen gestellt werden; hierzu werden nachstehend zwei Ausführungsbeispiele angegeben.

Der Nutzer möchte beispielsweise ein. Signal-zu-Rauschleistungsverhältnis im Amplitudenbild von wenigstens 30dB erreichen, wobei der Phasenfehler (ohne Mittelung) aber 1° nicht überschreiten sollte. Das flexible Kompressionssystem FLECS wählt daraufhin eine Kompression mit Kompressionsrate cr = 4 aus, wobei sich voraussichtlich ein SDNR von 48 dB und ein Phasenfehler von maximal 1° ergibt.

Real- und Imaginärteil werden in diesem Fall mit jeweils 7 Bit codiert. Die nötige Header-Information zur Wiederherstellung der unkomprimierten Daten beträgt außerdem noch einmal 2 Bit pro Real- oder Imaginärteil, so daß insgesamt 7 Bit + 7 Bit + 2 Bit = 16 Bit zur Abspeicherung eines komplexen komprimierten Abtastwertes benötigt werden. Dies führt zu einer Kompressionsrate von 64/16 = 4, wenn von unkomprimierten komplexen Abtastwerten mit jeweils 32 Bit für Real- und Imaginärteil ausgegangen wird.

Sinnvoll erscheint es, eine Interaktionsmöglichkeit des Nutzers vorzusehen, so daß er seine Vorgaben hinsichtlich der Qualitätsparameter korrigieren kann.

Ist der Nutzer nur an einem Überblick über die Szene mit einer mittleren Bildqualität (nicht schlechter als ein SDNR von 10dB) ohne Phase interessiert, so wird eine Kompression im Polarformat vorgenommen. Da die Phase für die Anwendung nicht benötigt wird, halbieren sich die zu komprimierenden Daten von vornherein (cr = 32). Pro Amplitudenwert werden jeweils 2 Bit verwendet. In diesem Fall ist eine Rekonstruktion der komplexen SAR-Daten nicht möglich, da die Phaseninformation nicht übertragen wird. Falls weitere komplexe Verarbeitungsschritte, wie eine Fouriertransformation, gewünscht sind, kann eine Phase von null Grad (0°) eingefügt werden. Bei einer Phase von null entspricht aber der Realteil eines jeden komplexen Abtastwertes genau dem Amplitudenwert des Abtastwertes, während sein Imaginärteil null ist.

Nachfolgend wird die Erfindung anhand von Ausführungsbeispielen unter Bezugnahme auf die anliegenden Zeichnungen im einzelnen erläutert. Es zeigen:

Fig.1 ein Übersichtsdiagramm eines Ausführungsbeispiels bezüglich einer Kompression mittels des flexiblen Kompressionssystems;

Fig. 2 eine Übersicht hinsichtlich einer Dekompression von komplexen SAR-Daten mittels des flexiblen Kompressionssystems;

Fig. 3 eine Kompression und Dekompression von Amplitude, Realteil oder Imaginärteil von komplexen SAR-Bilddaten;

Fig.4 eine Kompression und Dekompression der Phase mittels des flexiblen Kompressionssystems, und

Fig. 5 ein Beispiel für die verwendeten Blockgrößen für eine Kompensation von Amplitude, Real- oder Imaginärteil mittels des flexiblen Kompressionssystems;

Fig. 6 eine Tabelle 1 in Form einer Entscheidungstabelle bezüglich des flexiblen Kompressionssystems, und

Fig.7 eine Tabelle 2 in Form einer Bitmaskentabelle mit Bitmasken für jeweils vier ganzzahlige Werte für alle möglichen Kompressionsgrade.

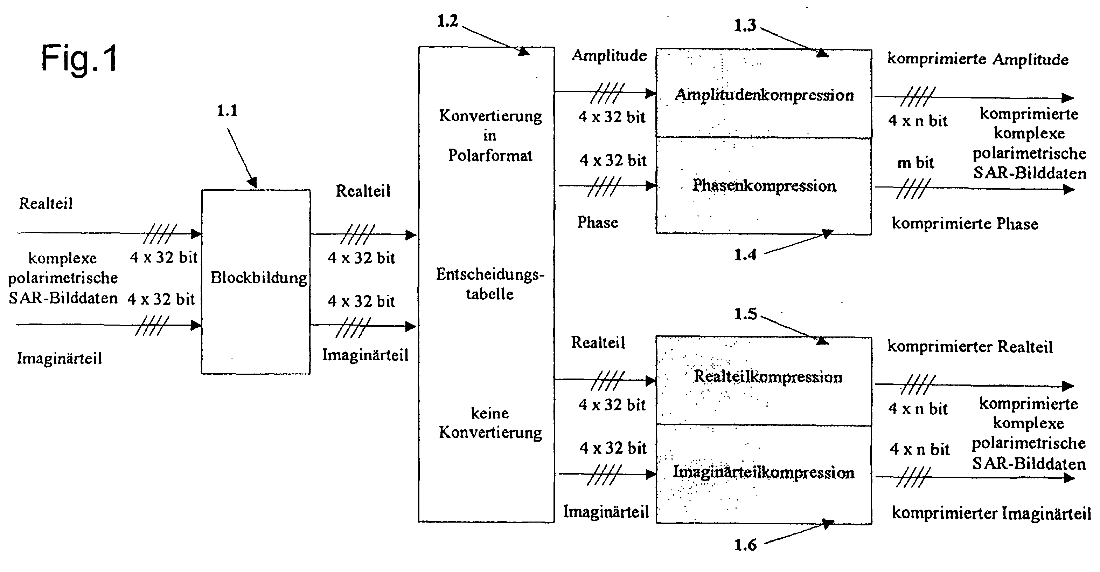

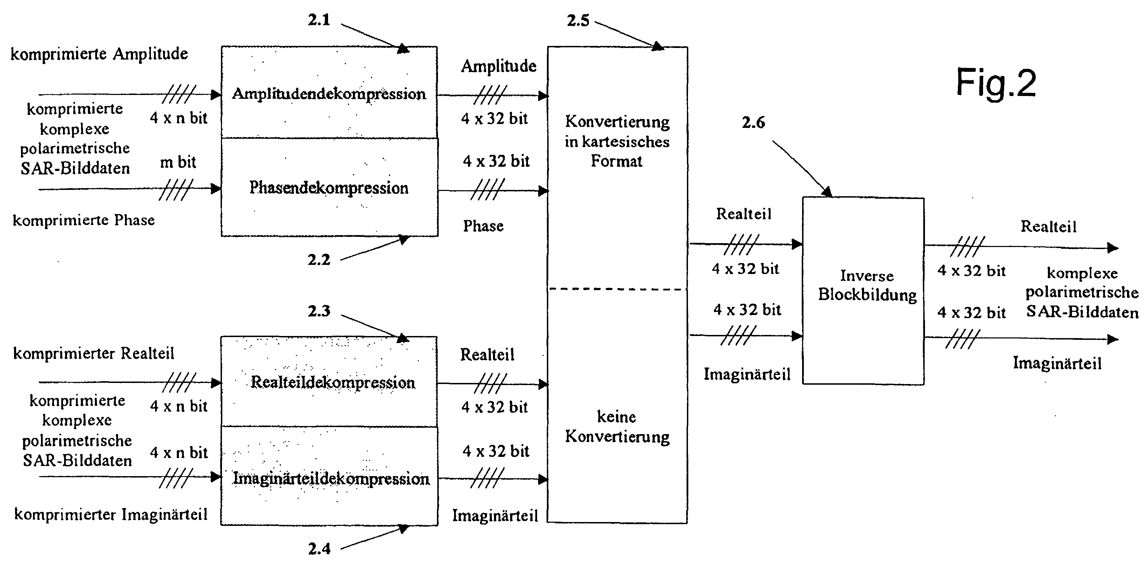

Anhand von Fig. 1 wird eine Übersicht über das Kompressionsverfahren in Form des flexiblen Kompressionssystems gegeben. Der Weg der Daten über die nachstehend im einzelnen beschriebenen Einheiten 1.1 bis 1.4 verdeutlicht eine Kompression im Polarformat, während bei einem Datenweg über die Einheiten 1.1, 1.2, 1.5 und 1.6 im kartesischen Format komprimiert wird. Fig.2 ist eine entsprechende Übersicht für die Dekompression mittels des flexiblen Kompressionssystems.

Wie Fig.1 zu entnehmen ist, wird aus einem SAR-Bilddatensatz aus komplexen polarimetrischen SAR-Bilddaten sowohl hinsichtlich des Realteils als auch des Imaginärteils in einer mit Blockbildung bezeichneten Einheit 1.1 ein Block ausgeschnitten (siehe hierzu auch Bildblöcke in Bild 5). Minimal umfaßt ein Block 1024x1024 komplexe Abtastwerte, und zwar 1024 Abtastwerte in Entfernungsrichtung und 1024 Abtastwerte in Azimutrichtung. In einer Einheit 1.2 wird eine eventuell notwendige Umwandlung von komplexen SAR-Bilddaten aus dem kartesichen Format in das Polarformat durchgeführt. Nach einer solchen erforderlichen Umwandlung werden jeweils sowohl für die Amplitude als auch für die Phase 32 Bit pro Abtastwert erhalten.

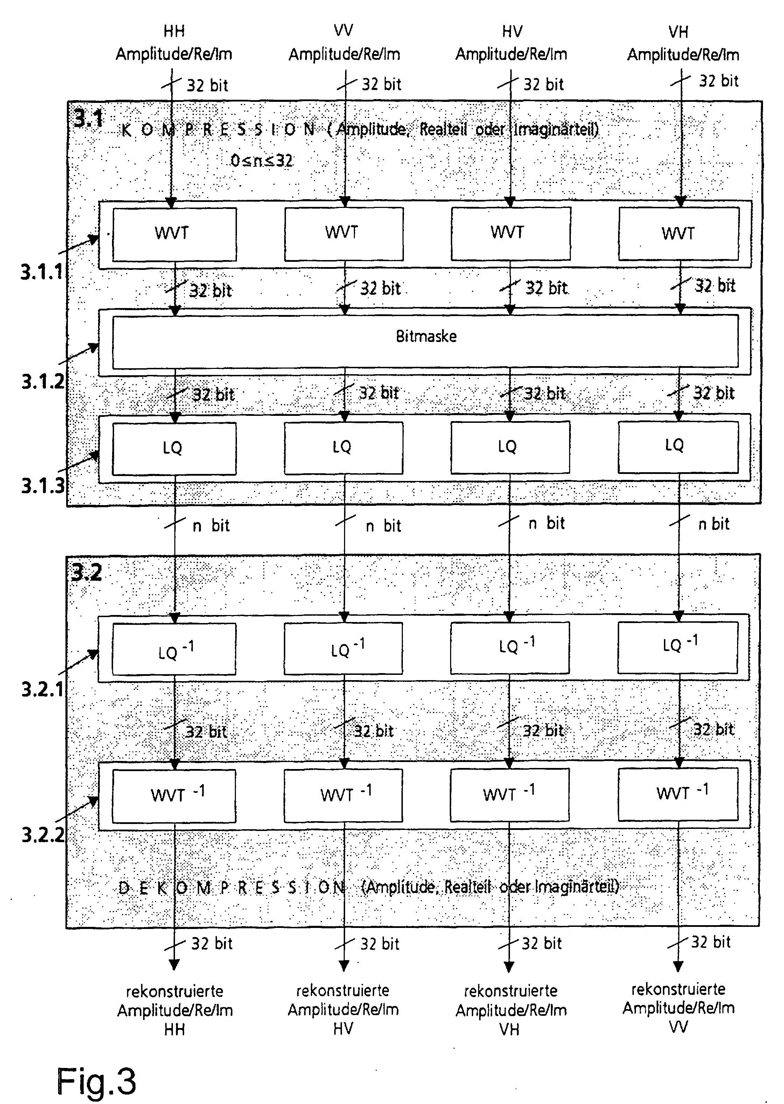

In einer Einheit 1.3 wird bezüglich der Amplitude eine Amplitudenkompression, in einer Einheit 1.5 wird bezüglich des Realteils eine Realteilkompression und in einer Einheit 1.6 wird auch bezüglich des Imaginärteils eine ImaginärteilKompression jeweils nach derselben Methode, jedoch mit unterschiedlichen Bitmasken durchgeführt, so daß der Datenstrom auf n Bits pro codiertem Wert reduziert wird. Einzelheiten der Kompression von Amplitude, Real- oder Imaginärteil werden anhand von Fig.3 in Verbindung mit einer Einheit 3.1 erläutert. Bezüglich Amplitude, Realteil und/oder Imaginärteil wird ein Kompressionsgrad von $cr_A = cr_{re} = cr_{im} = 32/n$ erreicht.

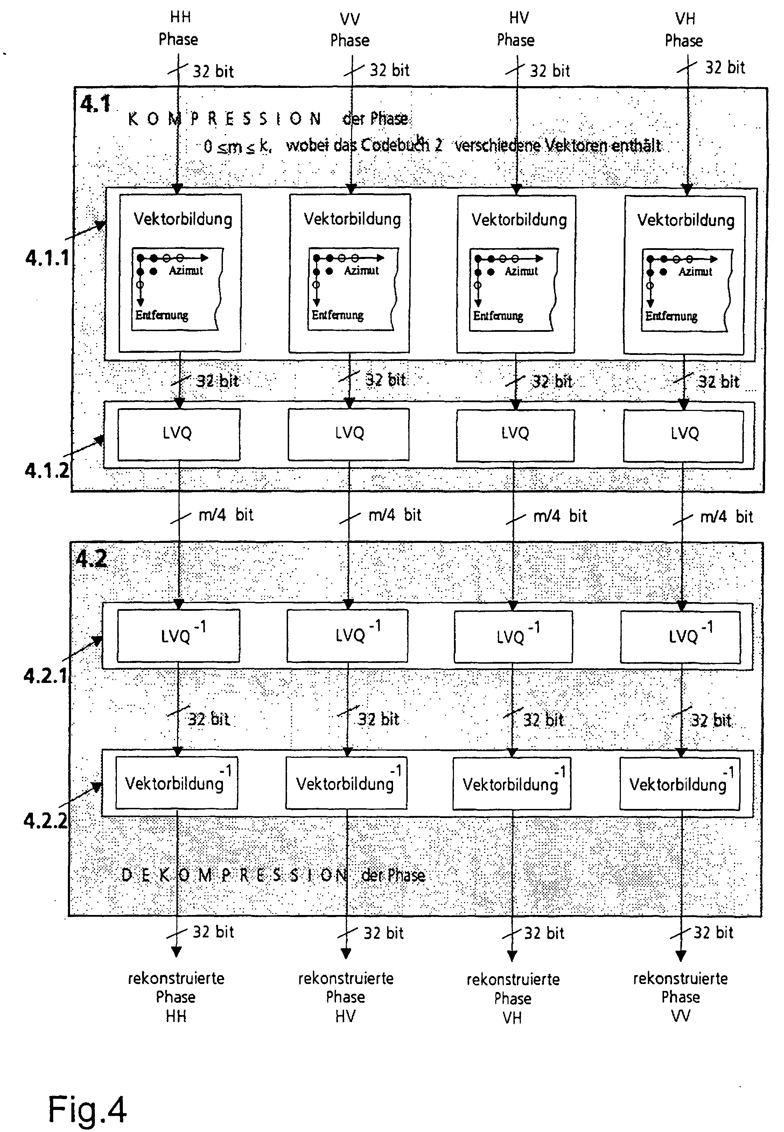

In einer Einheit 1.4 wird eine Phasenkompression bezüglich der Phase durchgeführt, wobei Einzelheiten anhand einer Einheit 4.1 in Fig.4 erläutert werden. Bei einer Vektorlänge von 4 wird ein Kompressionsgrad von $cr_p = 32*4/m$ erreicht. Für sehr hohe Phasengenauigkeiten ist auch eine Kompression mit einem Kompressionsgrad null vorgesehen. Das heißt, die Phase wird nicht komprimiert.

Für die Kompression im Polarformat ergibt sich eine Gesamtkompressionsrate $cr_a$ aus der Amplitudenkompressionsrate $dr_A$ und der Phasenkompressionsrate $cr_p$ zu

$$cr = \frac{2}{\frac{1}{cr_A} + \frac{1}{cr_P}} \qquad (2)$$

Im kartesischen Format ist die Gesamtkompressionsrate $c_r$:

$$cr = cr_{re} = cr_{im} = \frac{32}{n} \ . \qquad (3)$$

An den Ausgängen der eine Amplitudenkompression durchführenden Einheit 1.3 und der eine Phasenkompression durchführenden Einheit 1.4 liegen komprimierte komplexe polarimetrische SAR-Bilddaten bezüglich der komprimierten Amplitude von 4 x n Bit und bezüglich der komprimierten Phasen von m Bit an. Am Ausgang der eine Realteilkompression durchführenden Einheit 1.5 und der eine Imaginärteilkompression durchführenden Einheit 1.6 liegen komprimierte komplexe polarimetrische SAR-Bilddaten mit einem komprimierten Real- und Imaginärteil von jeweils 4 x n Bit an.

Fig.2 zeigt eine Dekompression der Daten im Rahmen des flexiblen Kompressionssystems im Überblick. Auf die komprimierte Amplitude wird in einer Einheit 2.1 eine Amplituden-Dekompression, auf den komprimierten Realteil wird in einer Einheit 2.3 eine Realteil-Dekompression oder auf den komprimierten Imaginärteil wird in einer Einheit 2.4 eine Imaginärteil-Dekompression mit 32 Bit pro Abtastwert durchgeführt.

Auf diese Weise werden rekonstruierte Daten mit 32 Bit pro Amplitude vom Realteil und/oder Imaginärteil erhalten. Einzelheiten werden anhand von Fig.3 in einer Einheit 3.2 erläutert. Bezüglich der komprimierten Phase der komplexen polarimetrischen SAR-Bilddaten wird in einer Einheit 2.2 eine Phasendekompression durchgeführt. Dadurch werden auch bezüglich der rekonstruierten Phase 32 Bit pro Abtastwert erhalten. Nähere Einzelheiten zur Phasendekompression werden anhand von Fig.4 erläutert.

SAR-Bilddaten werden hinsichtlich Amplitude und Phase gegebenenfalls in einer Einheit 2.5 in das kartesische Format rückkonvertiert und liegen dann mit jeweils 32 Bit sowohl für den Realteil als auch für den Imaginärteil vor. Anschließend werden die einzelnen rekonstruierten Datenblöcke wieder zu einem gesamten Datensatz in einer Einheit 2.6 zusammengefügt.

Anhand einer Übersicht in Fig.3 wird die Amplitudenkompression und -dekompression für einen vollpolarimetrischen SAR-Bilddatensatz beschrieben. Ebenso wie die Amplitudenwerte, jedoch mit entsprechend anderen Bitmasken werden auch der Real- und der Imaginärteil von Abtastwerten codiert. Die zu codierenden Daten liegen vor einer Kompression mit 32 Bit pro Abtastwert vor. Zunächst werden in einer Einheit 3.1 die Abtastwerte mittels Wavelets transformiert (WVT) (Daubechies I., Ten Lectures on Wavelets, CBMS-NSF Regional Conferencer Series in Applied Mathematics, Philadelphia, 1992, S. 355).

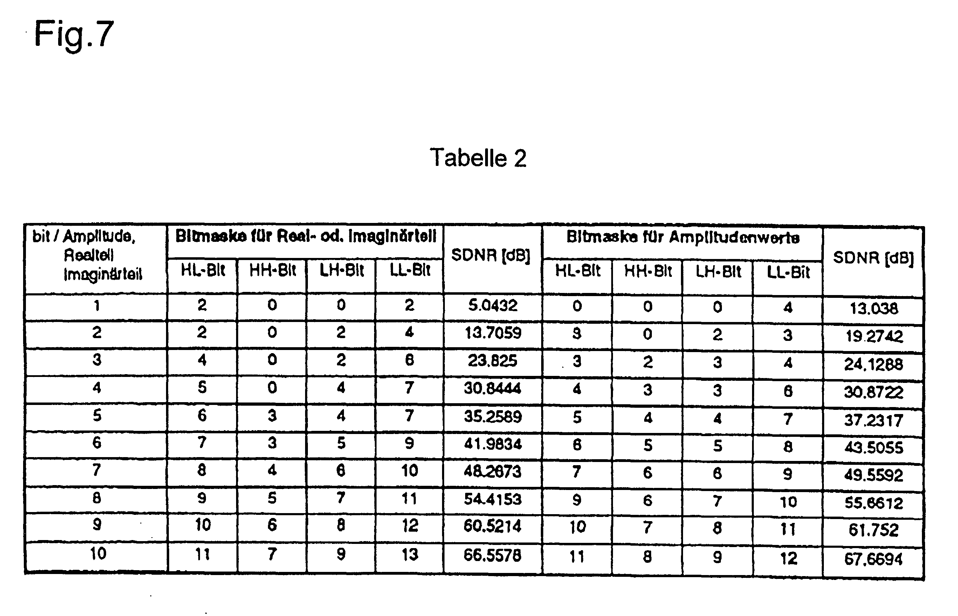

Die transformierten Werte (Koeffizienten) mit jeweils wieder 32 Bits werden dann entsprechend einer Bitmaske quantisiert. Die Bitmasken werden basierend auf der Wechselenergie in den einzelnen .Frequenzbändern in einem iterativen Optimierungsprozeß bestimmt. Dabei werden - entsprechend der unterschiedlichen Statistik - verschiedene Bitmasken für die transformierten Amplitudenwerte und für die transformierten Real- und Imaginärteile von Abtastwerten entwickelt. Die Bitmasken werden in einer Tabelle 2 abgelegt. (Siehe Fig.7)

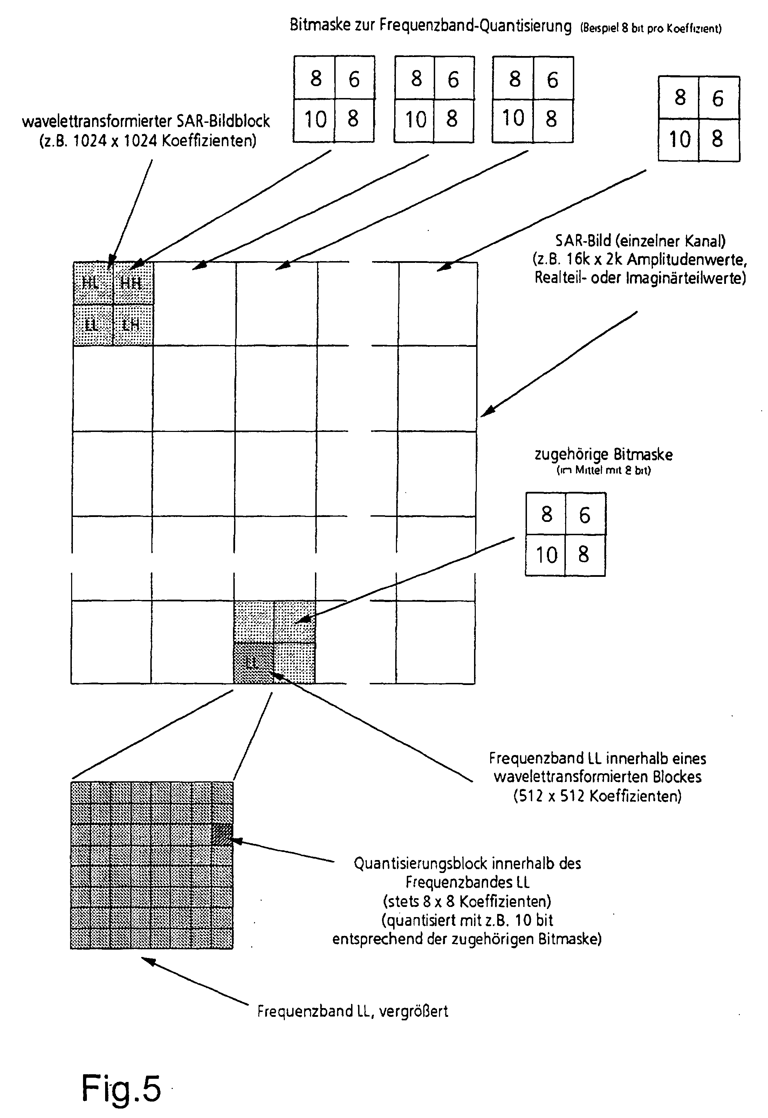

Tabelle 2 ist ein Beispiel für eine Bitmasken-Tabelle für einen Datensatz und enthält für jeweils vier ganzzalige Werte Bitmasken für alle möglichen Kompressionsgrade bereit. Für alle wavelettransformierten Blöcke eines SAR-Bildes und in jedem der vier polarimetrischen Kanäle kann für einen vorgegebenen Kompressionsgrad jeweils dieselbe Bitmaske verwendet werden, wie durch die Einheit 3.1.2 in Fig.3 zum Ausdruck gebracht ist. Eine Blockbildung und eine Quantisierung mit Hilfe von Bitmasken sind in Fig.5 verdeutlicht. Nach einer Quantisierung liegen die Koeffizienten mit n Bit anstelle von 32 Bit vor, woraus sich ein Kompressionsfaktor von $cr_A = cr_{re} = cr_{im} = 32/n$ ergibt.

Zur Quantisierung dient ein linearer Quantisierer, der auf kleinen Blöcken von stets (8x8) Koeffizienten operiert (Einheit 3.1.3). Die zu quantisierenden Koeffizienten werden zunächst so umskaliert, daß das Blockminimum auf Null und das Blockmaximum auf $2^n-1$ abgebildet wird. Die eigentliche Quantisierung geschieht dann durch Runden auf die nächste ganze Zahl. Blockminimum und Blockmaximum werden, da zur Restauration des Koeffizientenblockes benötigt, separat gespeichert. (Header-Information).

Bei der inversen (linearen) Quantisierung (Einheit 3.2.1) wird ein codierter Block so umskaliert, daß sein Blockminimum (Null) das ursprüngliche Blockminimum und seinen Blockmaximum ($2^n-1$) das ursprüngliche Blockmaximum zugeordnet wird.

Nun kann die inverse Wavelettransformation ($WVT^{-1}$) in einer Einheit 3.2.2 erfolgen. Somit werden rekonstruierte Amplituden bzw. Real- oder Imaginärteile der ursprünglichen Abtastwerte erhalten.

Wird eine Phaseninformation benötigt, erfolgt zusätzlich zur Übertragung der komprimierten Amplitude die Übertragung der unkomprimierten oder komprimierten Phase. In Fig.4 ist ein Überblick über eine Phasenkompression (Einheit 4.1) und eine Phasendekompression (Einheit 4.2) gegeben.

Zunächst werden aus je vier Phasenwerten in einer Einheit 4.1.1 Vektoren gebildet. Hierbei werden kleine Blöcke (2x2) von je vier Phasenwerten, nämlich zwei Werte in Azimutrichtung und zwei in Entfernungsrichtung zu je einem Vektor zusammengeführt. Die Phasenkompression erfolgt mittels eines lernfähigen Vektorquantisierers (LVQ; Einheit 4.1.2). Ein Vektorquantisierer sucht für jeden Eingangsvektor den ähnlichsten Codevektor aus einem vorliegenden Codebuch.

Die Codevektoren werden in einer Trainingsphase für alle vier Kanäle erlernt und in vier Codebüchern abgelegt. Dieser Lernvorgang kann nach verschiedenen Algorthmen erfolgen; es führt aber bereits das einfache Lernverfahren nach Linde, Buzu und Gray zu guten Ergebnissen (Linde, Y., Buzo, A., Gray, R., "An Algorithm for Vector Quantizer Design", IEEE Transactions on Communications, Vol.28, Nr.1, Jan. 1980).

Im Betriebsmodus (Einheit 4.1.2) wird vom Vektorquantisierer statt des Eingangsvektors (vier Phasenwerte mit je 32 Bit) nur die Adresse des entsprechenden Codebuchvektors im Codebuch übertragen. Dazu sind m Bit erforderlich. Bei einer Vektorlänge von 4 ergibt sich eine Datenkompression von

$$cr_p = \frac{4 \cdot 32}{m} \qquad (4)$$

Hierbei ergibt sich die Gesamtkompressionsrate für den Datensatz aus dem Amplitudenkompressionsgrad $cr_A$ und dem Phasenkompressionsgrad $cr_p$ nach Gl. (3).

Die Dekompression der Phase wird anhand einer Einheit 4.2 veranschaulicht. Anstelle des ursprünglichen Vektors wird der diesem Vektor ähnlichste Codevektor restauriert. Der Empfänger besitzt die gleichen Codebücher wie der Codierer. Somit kann mit der übertragenen Codebuchadresse der Codebuchvektor ausgelesen werden (Einheit 4.2.1). Er stellt den rekonstruierten Eingangsvektor dar. Diese Vektoren werden bei der inversen Vektorbildung in die einzelne Phasenwerte des jeweiligen Kanals (Einheit 4.2.2) zerlegt. Damit werden für jeden Kanal dessen rekonstruierte Phasenwerte erhalten.

Das erfindungsgemäße Verfahren in Form des flexiblen Kompressionssystems FLECS kann außer zur Kompression polarimetrischer SAR-Bilddaten, allgemein zur Kompression komplexer Daten angewandt werden. Insbesondere ist es daher auch geeignet komplexe SAR-Bilddaten zu komprimieren, die zu einer interferometrischen Auswertung herangezogen werden sollen.

Das Verfahren FLECS kann zudem für eine progressive Rekonstruktion komplexer Daten eingesetzt werden. Werden Daten aus Archiven ausgelesen, genügt für eine erste Suche eine Amplitudeninformation mit geringer Auflösung, was zu einer sehr hohen Kompressionsrate führt. Kann hierbei die Auswahl auf wenige Datensätze eingeschränkt werden, wird die Auflösung weiter erhöht und letztlich kann bei Bedarf auch die Phase übertragen werden.

## Patentansprüche

1. Verfahren zur Kompression und Dekompression von Bilddaten eines SAR-Radars, **dadurch gekennzeichnet, daß** angepaßt an einen geforderten Kompressionsgrad und an Qualitätsanforderungen bezüglich rekonstruierter Daten
sendeseitig

    die Kompression unmittelbar auf in komplexer Signalform (mit Real- und Imaginärteil) vorliegende Daten angewendet wird, oder
die in komplexem Signalformat (mit Real- und Imaginärteil) vorliegenden Daten der SAR-Verarbeitung blockweise in Polarkoordinaten mit Amplituden- und Phasenwert konvertiert werden, und
die Amplituden- und Phasenwerte getrennt mit verschiedenen Algorithmen komprimiert und übertragen werden, und empfangsseitig
die übertragenen Signale entsprechend nach Amplituden und Phasen getrennt dekomprimiert werden;
die komprimierten Amplituden- und Phasensignale in inverser Weise in Real- und Imaginärteil enthaltende, komplexe Signal konvertiert, und dann
blockweise in das komplexe Signalformat der SAR-Daten umgewandelt werden.

2. Verfahren nach Anspruch 1, **dadurch gekennzeichnet, daß** sendeseitig die Amplitudenwerte oder Real- und Imaginärteil der Abtastwerte in einer Iteration einer Wavelettransformation unterzogen werden, wodurch vier Frequenzbänder mit unterschiedlichem Energiegehalt entstehen;

    in Abhängigkeit von einem geforderten Kompressionsgrad und von dem Energiegehalt in einem iterativen Optimierungsverfahren eine Bitmaske erstellt wird, die für jedes der vier Frequenzbänder die Bitzahl für eine Quantisierung enthält, entsprechend einer Bitmaske quantisiert wird, sowie empfangsseitig

die übertragenen Daten entsprechend der Bitmaske und den Quantisierungsparametern decodiert und dann
die übertragenen Daten mittels inverser Wavelets transformiert werden.

3. Verfahren nach Anspruch 2, **dadurch gekennzeichnet, daß** sendeseitig

eine Phasenkompression mittels einer Vektorquantisierung durchgeführt wird, indem zwei Werte in Azimutrichtung und zwei Werte in Entfernungsrichtung zu einem vierdimensionalen Vektor angeordnet werden, und
in einer Lernphase typische Vektoren erlernt und in einem Codebuch abgelegt werden, und zur Datenkompression statt eines Vektors die Adresse des ähnlichsten Codebuch-Vektors übertragen wird, und empfangsseitig
da dort dasselbe Codebuch vorliegt, aus dem Codebuch mittels der übertragenen Adresse der ursprüngliche Vektor wieder rekonstruiert wird.

4. Verfahren nach Anspruch 2, **dadurch gekennzeichnet, daß** sendeseitig die transformierten Daten in kleine Blöcke unterteilt werden und ein adaptiver Blockquantisierer angewendet wird, wobei, wenn die Blöcke klein genug sind, ein adaptiver linearer Quantisierer für alle Frequenzbänder angewendet wird, während, wenn die Blöcke größer gewählt werden, auf die Blöcke eines Bandes mit niedrigen Frequenzen ein basierend auf einem Max-Lloyd-Quantisierer, adaptiver Blockquantisierer angewendet wird.

5. Verfahren nach den Ansprüchen 2 und 3, **dadurch gekennzeichnet, daß** eine Schrittgröße des linearen Quantisierers an die Dynamik des jeweiligen Blockes angepaßt wird, wobei die Schrittzahl durch die ermittelte Bitzahl und durch Eintrag der Bitmaske für jedes Frequenzband festgelegt wird.

**Claims**

1. A method for compression and decompression of image data of a SAR radar **characterized in that** adapted to a required compression level and quality requirements as regards the reconstructed data

at the transmitting end
applying compression directly to the data existing in complex signal form (including a real part and an imaginary part),
or
converting the data existing in complex signal format (including a real part and an imaginary part) of a SAR processing blockwise into polar coordinates having an amplitude value and a phase value, and
transmitting the amplitude values and phase values separately compressed with different algorithms, and at the receiving end
decompressing the transferred signals separately according to amplitudes and phases;
converting the compressed amplitude signals and phase signals inversely into complex signals containing the real part and imaginary part, and then
converting said complex signals blockwise into the complex signal format of the SAR data.

2. The method as set forth in claim 1, **characterized in that -** at the transmitting end - the amplitude values or real part or imaginary part of the scan values are subjected in an iteration to a wavelet transformation resulting in four frequency bands each differing in energy content;

a bit mask containing for each of the four frequency bands the bit number for quantizing is produced in an iterative optimizing procedure in dependence on a required compression level and the energy content and
is quantized in accordance with the bit mask, and that
at the receiving end
the transmitted data is decoded in accordance with the bit mask and the quantization parameters and then
the transmitted data is transformed by means of inverse wavelets.

3. The method as set forth in claim 2, **characterized in that**

at the transmitting end
a phase compression is implemented by means of a vector quantization, by two values in the azimuth direction and two values in the range direction being combined into a four-dimensional vector, and
typical vectors being learnt in a learning phase and deposited in a code book, and
instead of a vector the address of the most similar code book vector is transmitted for data compression and
at the receiving end
since the same code book is contained there, the original vector is reconstructed from the code book by means of the transmitted address.

4. The method as set forth in claim 2, **characterized in that** - at the transmitting end - the transformed data are sub-divided into small blocks and use is made of a block quantizer, whereby, when the blocks are small enough, an adaptive linear quantizer is employed for all frequency bands whilst, when the blocks are selected larger, an adaptive block quantizer on the basis of a Max-Lloyd quantizer is applied to the blocks of a band having low frequencies.

5. The method as set forth in claim 2 or claim 3, **characterized in that** a stepping size of the linear quantizer is adapted to the dynamics of each block, the number of steps being determined by the established bit number and by entering the bit mask for each frequency band.

**Revendications**

1. Procédé de compression et de décompression pour des données d'images d'un radar à synthèse d'ouverture (RSO), **caractérisé en ce que**, de façon adaptée à un degré de compression donné et à des exigences de qualité en fonction des données reconstituées,

du côté de l'émetteur
la compression est immédiatement utilisée pour des données disponibles sous forme de signal complexe (avec partie réelle et partie virtuelle) ou bien
les données disponibles du traitement par RSO en format de signal complexe (avec partie réelle et partie virtuelle) sont converties bloc par bloc en coordonnées polaires avec une valeur d'amplitude et une valeur de phase et
les valeurs d'amplitude et de phase sont compressées et transférées séparément avec différents algorithmes et
du côté du récepteur
les signaux transférés sont décompressés séparément selon l'amplitude et les phases ;
les signaux d'amplitude et de phase sont convertis de façon inverse en signal complexe comprenant une partie réelle et une partie virtuelle puis
transformés bloc par bloc dans le format de signal complexe des données RSO.

2. Procédé selon la revendication 1 **caractérisé en ce que**
du côté de l'émetteur

les valeurs d'amplitude ou la partie réelle et virtuelle des valeurs de balayage sont soumises à une itération d'une transformation d'ondelettes de sorte qu'on obtient quatre bandes de fréquence avec une teneur énergétique différente;
en fonction du degré de compression demandé et de la teneur énergétique, un masque binaire est élaboré selon un procédé d'optimisation itératif, lequel masque, pour chacune des quatre bandes de fréquence, contient le nombre de bits pour une quantification, est quantifié selon un masque binaire et
du côté du récepteur
les données transférées sont décodées en fonction du masque binaire et des paramètres de quantification puis
les données transférées sont transformées au moyen d'ondelettes inverses.

3. Procédé selon la revendication 2 **caractérisé en ce que**

du côté de l'émetteur
on réalise une compression de phase au moyen d'une quantification vectorielle en groupant deux valeurs en direction azimutale et deux valeurs en direction opposée en obtenant un vecteur à quatre dimensions et
on enseigne les vecteurs typiques au cours d'une phase d'apprentissage et on les stocke dans un guide de codification et
pour la compression des données on transmet, au lieu d'un vecteur, l'adresse du vecteur du guide de codification le plus ressemblant et
du côté du récepteur,
du fait qu'on dispose du même guide de codification, le vecteur originel est de nouveau reconstitué en l'extrayant du guide de codification au moyen de l'adresse transmise.

4. Procédé selon la revendication 2 **caractérisé en ce que**
du côté de l'émetteur les données transformées sont réparties en petits blocs et qu'on utilise un quantificateur de blocs adaptatif; quand les blocs sont suffisamment petits, on utilise un quantificateur adaptatif linéaire pour toutes les bandes de fréquence alors que, quand on choisit des blocs plus grands, on utilise un quantificateur de blocs basé sur un quantificateur Max-Lloyd sur les blocs d'une bande avec de basses fréquences.

5. Procédé selon les revendications 2 et 3 **caractérisé en ce qu'**une valeur des éléments du quantificateur linéaire est adaptée à la dynamique de chacun des blocs, le nombre des éléments étant déterminé par le nombre de bits détectés et par un enregistrement du masque binaire pour chacune des bandes de fréquence.

# Fig.1

EP 0 959 369 B1

Fig.2

komprimierte Amplitude

komprimierte komplexe polarimetrische SAR-Bilddaten

komprimierte Phase

**2.1** Amplitudendekompression — 4 x n bit

m bit — Phasendekompression **2.2**

Amplitude — 4 x 32 bit

4 x 32 bit — Phase

**2.5** Konvertierung in kartesisches Format

keine Konvertierung

komprimierter Realteil

komprimierte komplexe polarimetrische SAR-Bilddaten

komprimierter Imaginärteil

**2.3** Realteildekompression — 4 x n bit

4 x n bit — Imaginärteildekompression **2.4**

Realteil — 4 x 32 bit

4 x 32 bit — Imaginärteil

Realteil — 4 x 32 bit

4 x 32 bit — Imaginärteil

**2.6** Inverse Blockbildung

Realteil — 4 x 32 bit — komplexe polarimetrische SAR-Bilddaten

4 x 32 bit — Imaginärteil

EP 0 959 369 B1

HH
Amplitude/Re/Im

VV
Amplitude/Re/Im

HV
Amplitude/Re/Im

VH
Amplitude/Re/Im

32 bit · · · 32 bit · · · 32 bit · · · 32 bit

**3.1** K O M P R E S S I O N (Amplitude, Realteil oder Imaginärteil)

$0 \leq n \leq 32$

| WVT | WVT | WVT | WVT |

3.1.1

32 bit · · · 32 bit · · · 32 bit · · · 32 bit

| Bitmaske |

3.1.2

32 bit · · · 32 bit · · · 32 bit · · · 32 bit

| LQ | LQ | LQ | LQ |

3.1.3

n bit · · · n bit · · · n bit · · · n bit

**3.2**

| $LQ^{-1}$ | $LQ^{-1}$ | $LQ^{-1}$ | $LQ^{-1}$ |

3.2.1

32 bit · · · 32 bit · · · 32 bit · · · 32 bit

| $WVT^{-1}$ | $WVT^{-1}$ | $WVT^{-1}$ | $WVT^{-1}$ |

3.2.2

D E K O M P R E S S I O N (Amplitude, Realteil oder Imaginärteil)

32 bit · · · 32 bit · · · 32 bit · · · 32 bit

rekonstruierte
Amplitude/Re/Im
HH

rekonstruierte
Amplitude/Re/Im
HV

rekonstruierte
Amplitude/Re/Im
VH

rekonstruierte
Amplitude/Re/Im
VV

# Fig.3

Fig.4

Bitmaske zur Frequenzband-Quantisierung (Beispiel 8 bit pro Koeffizient)

| 8 | 6 |
|---|---|
| 10 | 8 |

| 8 | 6 |
|---|---|
| 10 | 8 |

| 8 | 6 |
|---|---|
| 10 | 8 |

| 8 | 6 |
|---|---|
| 10 | 8 |

wavelettransformierter SAR-Bildblock
(z.B. 1024 x 1024 Koeffizienten)

SAR-Bild (einzelner Kanal)
(z.B. 16k x 2k Amplitudenwerte,
Realteil- oder Imaginärteilwerte)

HL HH
LL LH

zugehörige Bitmaske
(im Mittel mit 8 bit)

| 8 | 6 |
|---|---|
| 10 | 8 |

LL

Frequenzband LL innerhalb eines
wavelettransformierten Blockes
(512 x 512 Koeffizienten)

Quantisierungsblock innerhalb des
Frequenzbandes LL
(stets 8 x 8 Koeffizienten)
(quantisiert mit z.B. 10 bit
entsprechend der zugehörigen Bitmaske)

Frequenzband LL, vergrößert

# Fig.5

# Fig.6

## Tabelle 1

| FLECS Entscheidungstabelle | | Polarformat verwenden | | | Kartesisches Format oder Polarformat (ohne Phase) verwenden | | | | | | |
|---|---|---|---|---|---|---|---|---|---|---|---|
| bit / Realteil-Abtastwert | | | | | 4 | 5 | 6 | 7 | 8 | 9 | 10 |
| bit / Imaginärteil-Abtastwert | | | | | 4 | 5 | 6 | 7 | 8 | 9 | 10 |
| bit / Amplituden-Abtastwert | | 1 | 2 | 3 | 4 | 5 | 6 | 7 | 8 | 9 | 10 |
| bit / Phasen-Abtastwert | | 3.5 | 3.5 | 3.5 | | | | | | | |
| Anzahl von Header-Bits | | 1 | 1 | 1 | 1 | 1 | 2 | 2 | 2 | 2 | 2 |
| Bitsumme ohne Phase | | 2 | 3 | 4 | 5 | 6 | 8 | 9 | 10 | 11 | 12 |
| Kompressionsrate ohne Phase | | 32 | 21.33 | 16 | 12.8 | 10.66 | 8 | 7.11 | 6.4 | 5.81 | 5.33 |
| Bitsumme mit Phase | | 5.5 | 6.5 | 7.5 | 9 | 11 | 14 | 16 | 18 | 20 | 22 |
| Kompressionsrate mit Phase | | 11.63 | 9.84 | 8.53 | 7.11 | 5.81 | 4.57 | 4 | 3.55 | 3.2 | 2.90 |
| Amplituden-Qualität | MSE | 6979.88 | 2822.6 | 878.124 | 118.35 | 43.1684 | 9.18187 | 2.1604 | 0.524481 | 0.128565 | 0.032025 |
| | NMSE | 4.8E-02 | 1.81E-02 | 6.06E-03 | 8.23E-04 | 2.98E-04 | 6.33E-05 | 1.49E-05 | 3.62E-06 | 8.87E-07 | 2.21E-07 |
| | SDNR [dB] | 19.174 | 17.425 | 22.177 | 30.844 | 36.269 | 41.983 | 48.267 | 54.416 | 60.521 | 66.558 |
| | PSNR [dB] | 55.3113 | 59.5621 | 64.3142 | 72.9815 | 77.3961 | 84.1205 | 90.4044 | 96.5624 | 102.659 | 108.695 |
| Phasen-Qualität | Ohne Glättung | 7.7293 | 7.7293 | 7.7293 | 5.1719 | 3.5741 | 1.8646 | 0.9686 | 0.5182 | 0.2714 | 0.1289 |
| | Glättung = 3 | 2.67957 | 2.679572 | 2.679572 | 1.795109 | 1.278138 | 0.613777 | 0.322587 | 0.174489 | 0.089446 | 0.042831 |
| | Glättung = 6 | 1.89227 | 1.892277 | 1.892277 | 1.206129 | 0.848757 | 0.402443 | 0.209447 | 0.116248 | 0.056882 | 0.027457 |
| | Glättung = 7 | 1.75660 | 1.756605 | 1.756605 | 1.004893 | 0.704609 | 0.347079 | 0.180096 | 0.097097 | 0.045472 | 0.0226 |

EP 0 959 369 B1

# Fig.7

Tabelle 2

| bit / Amplitude, Realteil Imaginärteil | Bitmaske für Real- od. Imaginärteil | | | | SDNR [dB] | Bitmaske für Amplitudenwerte | | | | SDNR [dB] |
|---|---|---|---|---|---|---|---|---|---|---|
| | HL-Bit | HH-Bit | LH-Bit | LL-Bit | | HL-Bit | HH-Bit | LH-Bit | LL-Bit | |
| 1 | 2 | 0 | 0 | 2 | 5.0432 | 0 | 0 | 0 | 4 | 13.038 |
| 2 | 2 | 0 | 2 | 4 | 13.7059 | 3 | 0 | 2 | 3 | 19.2742 |
| 3 | 4 | 0 | 2 | 6 | 23.825 | 3 | 2 | 3 | 4 | 24.1288 |
| 4 | 5 | 0 | 4 | 7 | 30.8444 | 4 | 3 | 3 | 6 | 30.8722 |
| 5 | 6 | 3 | 4 | 7 | 35.2589 | 5 | 4 | 4 | 7 | 37.2317 |
| 6 | 7 | 3 | 5 | 9 | 41.9834 | 6 | 5 | 5 | 8 | 43.5055 |
| 7 | 8 | 4 | 6 | 10 | 48.2673 | 7 | 6 | 6 | 9 | 49.5592 |
| 8 | 9 | 5 | 7 | 11 | 54.4153 | 9 | 6 | 7 | 10 | 55.6612 |
| 9 | 10 | 6 | 8 | 12 | 60.5214 | 10 | 7 | 8 | 11 | 61.752 |
| 10 | 11 | 7 | 9 | 13 | 66.5578 | 11 | 8 | 9 | 12 | 67.6694 |

EP 0 959 369 B1